# EUROPEAN PATENT APPLICATION

(11) **EP 1 511 229 A1**
(43) Date of publication of application: **02.03.2005**
(21) Application number: 02730845.1
(22) Date of filing: 31.05.2002
(51) Int. Cl.: H04L 12/56, G06F 15/177, G06F 13/00

(54) **PACKET REPEATING INSTALLATION, NETWORK CONNECTION DEVICE, PACKET REPEATING METHOD, RECORDING MEDIUM, PROGRAM**

(71) Applicant: FUJITSU LIMITED, Kawasaki-shi, Kanagawa 211-8588 (JP)
(72) Inventor: YOKOYAMA, Ken c/o FUJITSU LIMITED, Kawasaki-shi, Kanagawa 211-8588 (JP); YAMASHIMA, Hiroyuki c/o FUJITSU LIMITED, Kawasaki-shi, Kanagawa 211-8588 (JP); SHIMADA, Kuniaki c/o FUJITSU LIMITED, Kawasaki-shi, Kanagawa 211-8588 (JP)
(74) Representative: Sunderland, James Harry
(86) International application number: PCT/JP2002/005374
(87) International publication number: WO 2003/103233

(57) **Abstract**

By providing a plurality of packet relay processing units, each of which is realized by a different CPU, for a packet relay device performing an advanced function, such as a proxy server, a fire wall and the like, which comprises a server and a network interface card connected to this server, sessions can be appropriately distributed among the plurality of packet relay processing units and simultaneously the packet relay device is controlled in such a way that packets in the same session are processed by the same packet relay processing unit.

## Description

### Technical Field

The present invention relates to a packet relay device and the like.

### Background Art

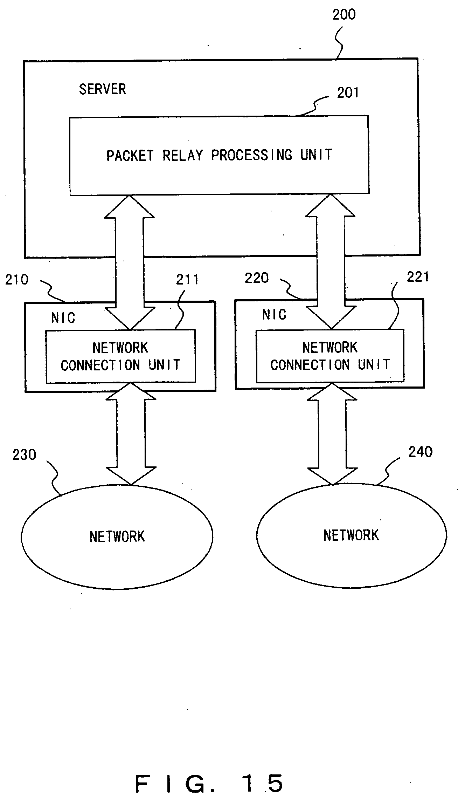

Conventionally, for example, a packet relay device performing an advanced function, such as a proxy server, a fire wall and the like, is built, as shown in Fig. 15, generally a server 200 is provided with network interface cards (NIC) 210 and 220 for the connection to networks 230 and 240, respectively, and a packet relay process accompanied by a packet filtering, NAT (network address translation), protocol conversion and the like is performed in the packet relay processing unit 201 of the server 200. The NICs 210 and 220 comprise network connection units 211 and 221, respectively. For one and the other of the networks 230 and 240, for example, an external network (the Internet, etc.) and an internal network (corporate LAN, etc.), respectively, are used.

Due to the recent sudden advent of the large-scaled Internet, the amount of packets flowing through a network has exponentially increased. For this reason, in a conventional packet relay device, the performance of a CPU is enhanced to improve the speed, or a plurality of CPUs is provided to enhance the processing performance.

However, even if a plurality of CPUs is provided, the plurality of CPUs cannot be efficiently handled. Therefore, it is known that the processing performance is not always displayed in proportion to the number of CPUs.

### Disclosure of Invention

An object of the present invention is to improve the processing speed of a packet relay processing device with a plurality of CPUs by enabling it to display performance in proportion to the number of CPUs.

The packet relay device of the present invention comprises a plurality of packet relay processing units each independently performing a packet relay process, a session management unit managing sessions, a session distribution unit distributing a session to one of the plurality of packet relay processing units, based on the session management of the session management unit every time a new session is registered.

According to a packet relay device with such a configuration, since a plurality of packet relay processing units can be operated in parallel, packet relay processing performance can be displayed in proportion to the number of CPUs.

In such a packet relay device, for example, a plurality of packet relay processing units is provided for a server, and the session management unit and session distribution unit are provided for a network connection device connected to the server.

In this case, simply by connecting the network connection device with such a configuration to the server with a plurality of CPUs, the packet relay device of the present invention can be realized.

Alternatively, for example, the plurality of packet relay processing units, session management unit and session distribution unit can be provided for a network connection device connected to a server.

For a specific session distribution method of the session distribution unit, a method for changing a distribution destination in order every time a new session is registered, a method for determining a distribution destination, based on a hush value obtained by applying a hush function to information in a packet, a method for distributing a session, based on the load information of each packet relay processing unit and the like are used.

The present invention can be embodied as a network connection device with such a configuration or a packet relay method. Alternatively, a variety of units of the packet relay device can be embodied as a program for enabling a computer to execute the functions of the units or a storage medium recording this program.

### Brief Description of Drawings

The present invention will be more apparent from the following detailed description when the accompanying drawings are referenced.
Fig. 1 shows the basic configuration of a packet relay device according to the preferred embodiment.
Fig. 2 shows the functional configuration of a packet relay device according to the first preferred embodiment.
Fig. 3 shows an example of a session table.
Fig. 4 is a flowchart showing the process performed when a packet to be relayed is inputted.
Fig. 5 is a flowchart showing the process performed when a packet to be relayed is relayed and outputted.
Fig. 6 is a flowchart showing a session distribution destination determination process by a round robin method.
Fig. 7 is a flowchart showing a session distribution destination determination process by a hash method.
Figs. 8A and 8B show a flowchart showing a session distribution destination determination process by a dynamic load distribution method.
Fig. 9 shows the configuration of the second preferred embodiment.
Fig. 10 shows the configuration of the third preferred embodiment.
Fig. 11 shows a specific example of the usage of a packet relay device according to the present invention.
Fig. 12 shows an example of the hardware configuration of a server (computer).
Fig. 13 shows examples of a storage medium recording a program or a program download.
Fig. 14 shows an example of the hardware configuration of a network interface card (NIC).
Fig. 15 shows the configuration of a conventional packet relay device.

### Best Mode for Carrying Out the Invention

The preferred embodiments of the present invention are described below with reference to the drawings.

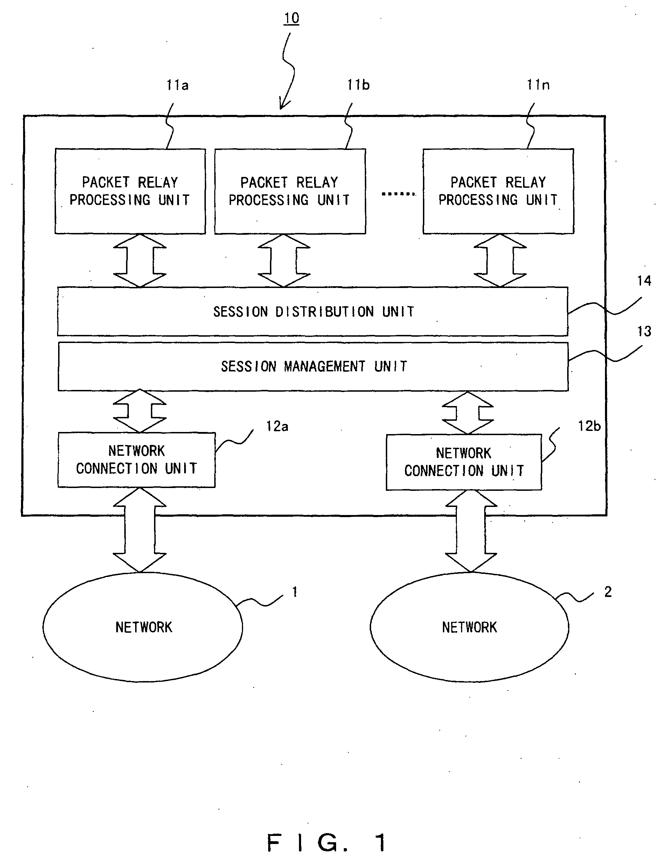

Fig. 1 shows the basic configuration of the packet relay device of the preferred embodiment.

The packet relay device 10 shown in Fig. 1 comprises a plurality of packet relay processing units 11a, 11b, ..., 11n and two network connection units 12a and 12b. Each of the packet relay processing units 11a, 11b, ..., 11n is realized by a different CPU. Specifically, it is presumed that the packet relay device 10 of the preferred embodiment comprises a plurality of CPUs.

The respective functions of the packet relay processing unit 11 and network connection unit 12 are the same as the packet relay processing unit 201 and network connection unit 211(or 221), respectively, of the conventional packet relay device. For example, the packet relay processing unit 11 performs a packet relay process accompanied by packet filtering, NAT (network address translation), protocol conversion and the like.

The packet relay device 10 of this preferred embodiment is characterized in that the session management unit 13 and session distribution unit 14 are added to such a configuration.

The session management unit 13 manages sessions in such a way that the same session ID is assigned to packets in the same session, by analyzing the header information of each packet. A session table, which is not shown in Fig. 1, is used for this management. The session table is described in detail later.

The session distribution unit 14 controls so that each session is appropriately distributed to one of the plurality of packet relay processing units 11. For example, for such a specific method, a round robin method, a hash method, a dynamic load distribution method or the like is used. Each of these methods is described in detail later.

The session distribution unit 14 forwards packets in the same session to the same packet relay processing unit 11. This is because in a device performing an advanced packet relay process, such as a proxy server, a fire wall and the like, packets cannot be practically processed unless packets in the same session are processed by the same packet relay processing unit 11 (If packets are exchanged between packet relay processing units 11, they can be processed. However, in that case, an extra load occurs. So it is not practical).

As described above, in the packet relay device of this preferred embodiment, a plurality of CPUs can be efficiently used. Therefore, in the packet relay device of this preferred embodiment, packet relay processing performance can be displayed in proportion to the number of CPUs.

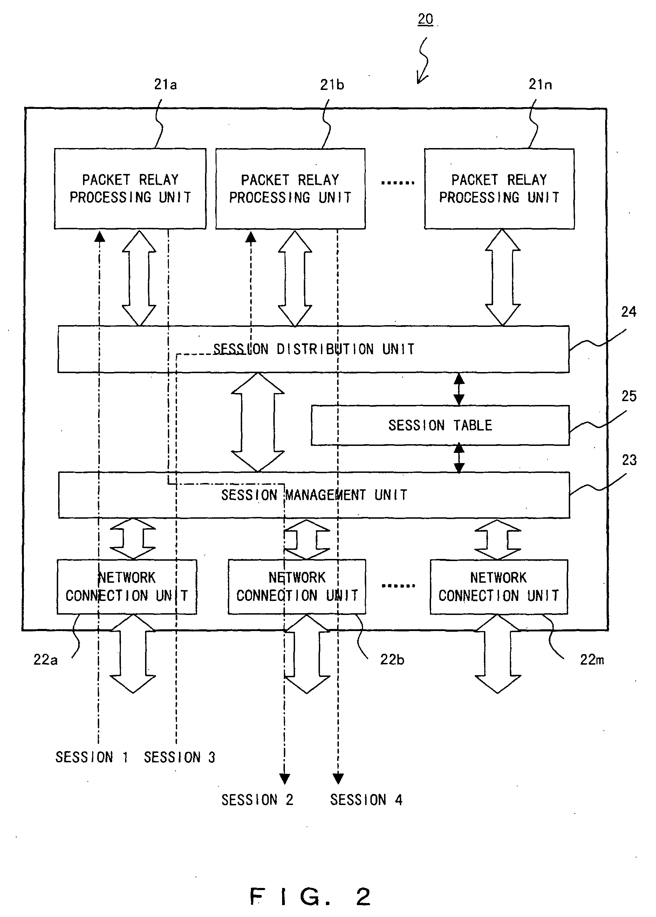

Firstly, the first preferred embodiment is described below with reference to Figs. 2 through 5.

Fig. 2 shows the functional configuration of a packet relay device in the first preferred embodiment.

The packet relay device 20 shown in Fig. 2 comprises a plurality of packet relay processing units 21a, 21b, ..., 21n, a plurality of network connection units 22a, 22b, ..., 22m, a session management unit 23, a session distribution unit 24 and a session table 25.

In the configuration, firstly, a packet inputted from a network, which is not shown in Fig. 2, through one of the network connection units 22a-22m is transmitted to the session management unit 23. The network connection units 22a-22m, are, for example, Ethernet controllers. Since the structure of a packet is popular, it is not shown in Fig. 2. However, it comprises a header section consisting of an Ether head, an IP head, a TCP/UDP head, and a data section.

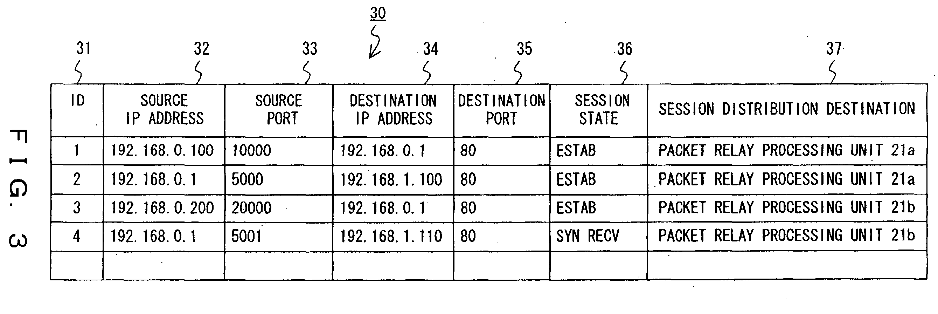

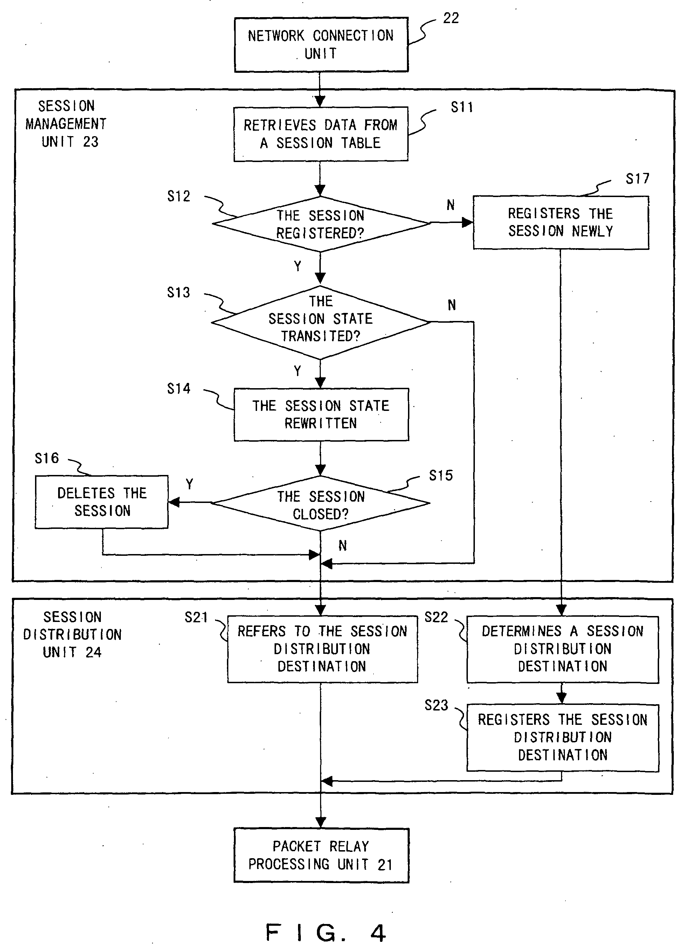

The respective processes of the session management unit 23, which has received the packet, and session distribution unit 24 are described below with reference to Figs. 3 and 4.

Firstly, the session management unit 23 retrieves data from the session table 25, as shown by the flowchart of the Fig. 4 (step S11), and judges whether the session of the inputted packet is already registered (step S12). The session table has, for example, the structure shown in Fig. 3.

The session table 30 shown in Fig. 3 stores session information needed to manage sessions. It comprises data items, such as an ID (session ID) 31, a source IP address 32, a source port 33, a destination IP address 34, a destination port 35, a session state 36 and a session distribution destination 37.

A session can be uniquely identified by a set of the transmitter/receiver IP addresses in the IP header of the packet and the transmitter/receiver ports in the TCP header of the packet. Therefore, the session table 30 can be retrieved using this set as a session retrieval key. Then, in step S12 it is judged whether there is a record in which any set of a transmitter IP address 32/receiver IP address 34 and transmitter port 33/receiver port 35 in the session table 30 matches the session retrieval key. An ID (session ID) 31 is the identification number identifying each session. The session distribution destination 37 is described later together with the session distribution unit 24.

Descriptions return to the flowchart shown in Fig. 4.

If in step S12 it is judged that the session of the inputted packet is not registered in the session table 30 (no in step S12), an ID 31 is assigned to this packet as a new session and its data is newly registered in the session table 30 as its session retrieval key (step S17). The newly registered packet is forwarded to the session distribution unit 24.

If it is detected by the retrieval of the session table 30 that the session is already registered in the session table 30 (yes in step S12) , it is judged whether the state is shifted, by checking its session state transition with the header information of the packet (step S13).

If the state is shifted (yes in step S13), the session state 36 of the session table 30 is rewritten. Since the rewriting of the session state 36 is disclosed in Japanese Patent Application No. 2000-308387 "Packet Relay Processing Device" already applied by this applicant, its details are not described here. However, for example, if in the case of TCP protocol, a SYN packet is received in a state where its session is not registered, the session of this packet is registered and the session state is designated as 'SYN_RECV' . Then, the session state transits to 'ESTAB (establishment)' and the packet is transmitted/received in this state. Then, upon receipt of an FIN packet (yes in step S15), the entry of the session is deleted from the session table 30 (step S16) and the packet is forwarded to the session distribution unit 24. If it is not shifted (no in step S13), the packet is forwarded to the session distribution unit 24 without performing any process.

If the packet is forwarded after the session management unit 23 has performed the process in step S17, specifically, the session has been newly registered in the session table 30, its session distribution destination is determined by the session distribution unit 24 (step S22). Specifically, a packet relay processing unit 21 that undertakes the packet process of this session is determined. Then, the determined contents are registered in the session distribution destination 37 of the session table 30 (step S23).

Since the session distribution destination 37 of the packet forwarded from the session management unit 23 after the processes in steps S13 through S16, is already registered in the session table 30, the packet relay processing unit 21 to which the packet is distributed can be identified by referring to this session distribution destination 37 by the session distribution unit 24 (step S21).

Then, the session distribution unit 24 transfers the packet to the packet relay processing unit 21 that is identified by the process in step S21 or that is determined by the process in step S22.

The packet relay processing unit 21 performs a packet relay process, such as the filtering, NAT (network address translation), protocol conversion and the like, of a packet. It also performs a routing process (process of determining a network (network connection unit 22) to which a packet should be routed).

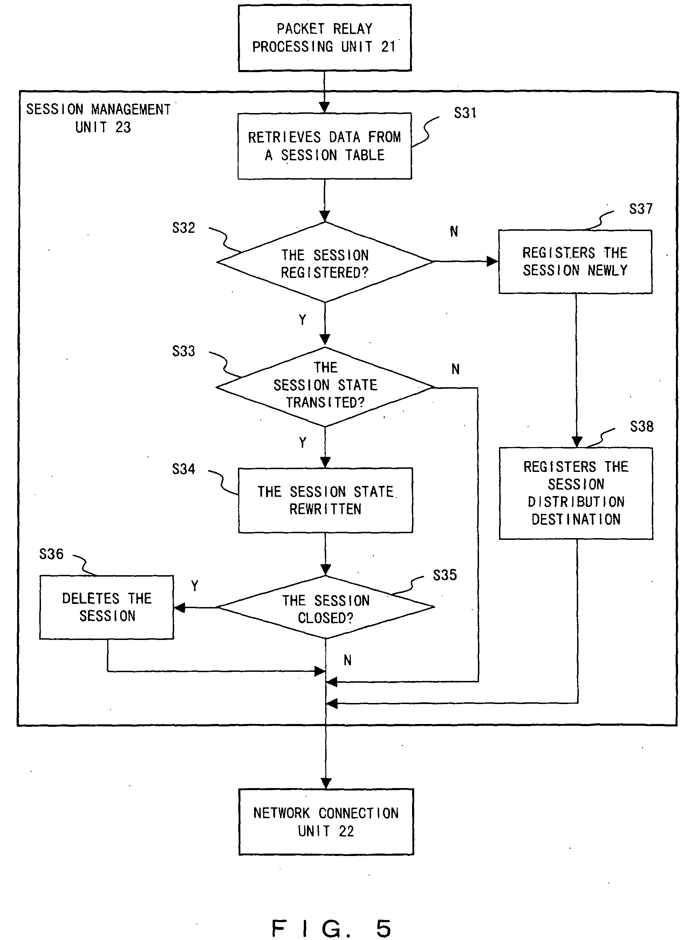

The packet that has been relayed/outputted by the packet relay processing unit 21 is forwarded to a network connection unit 22 to which the packet is routed by the process shown in the flowchart of Fig. 5.

Firstly, the packet is forwarded from the packet rely processing unit 21 to the session management unit 23.

Upon receipt of this packet, as shown in Fig. 4, firstly the session management unit 23 retrieves data from the session table 30 (step S31). If the session is already registered (yes in step S32) and if the session state is shifted (yes in step S33), the session state 36 is rewritten (step S34). If the session is closed (yes in step S35), the session is deleted (step S36). Then, the packet is forwarded to a network connection unit 22 to which it should be routed.

If the session is not registered yet (no in step S32), the session is newly registered (step s37). Then, its session distribution destination 37 is registered in the session table 30 (step S38). Specifically, since in this case, a packet relay processing unit 21 from which the packet has been forwarded is already known, there is no need for the session distribution unit 24 to determine its distribution destination.

After being processed by the session management unit 23, the packet is forwarded a network connection unit 22 to which the packet should be routed.

In Fig. 2, a packet relayed by the packet relay device 20 is managed in different sessions when a packet is inputted to the packet relay device and when it is relayed/outputted from the packet relay device. For example, in the example shown in Fig. 2, an arbitrary packet whose distribution destination is a packet rely processing unit 21a is managed in session 1 (ID=1) and session 2 (ID=2) when it is inputted through a network connection unit 22a and when it is outputted through a network connection unit 22b, respectively. Similarly, an arbitrary packet whose distribution destination is a packet rely processing unit 21b is managed in session 3 (ID=3) and session 4 (ID=4) when it is inputted through a network connection unit 22a and when it is outputted through a network connection unit 22b, respectively.

Therefore, when a specific packet is relayed, it is handled in different sessions in the process shown in Fig. 4 and in that shown in Fig. 5.

For the session distribution method of the session distribution unit 24, any method for displaying performance in proportion to the number of CPUs can be used. The following three are proposed as such methods. Specifically, a round robin method, a hash method and a dynamic load distribution method are each described below.

Firstly, a round robin method is described.

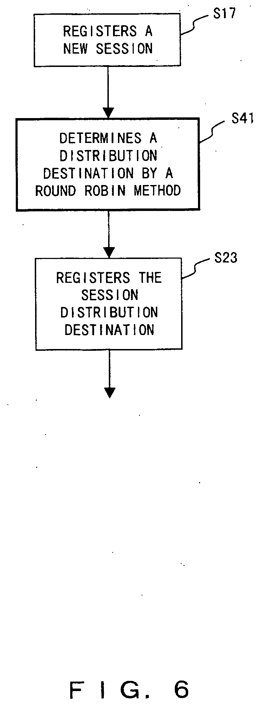

Fig. 6 shows the case where in the process consisting of steps S17, S22 and S23 of Fig. 4, the session distribution destination process in step S22 is performed by a round robin method. Specifically, if the session management unit 23 registers a new session in step S17, the session distribution unit 24 determines each distribution destination by a round robin method (step S41) and registers the determined session distribution destination in the session table 25 (step S23).

In the session distribution process by the round robin method, a packet relay processing unit 21 to which a packet should be distributed is changed in order every time a new session is registered.

For example, if firstly, session 1 is newly registered, a packet is distributed to a packet relay processing unit 21a. Then, if session 2 is newly registered, a packet is distributed to a packet relay processing unit 21b. Similarly, every time a new session is registered, a packet is distributed to a different packet relay processing unit 21 in order. After a packet is distributed to the last packet relay processing unit 21n, the distribution destination of a subsequent session returns to the packet relay processing unit 21a.

In this way, by evenly distributing sessions among the packet processing units 21, a plurality of CPUs can be efficiently used and processing performance can be displayed in proportion to the number of CPUs.

Next, a hash method is described.

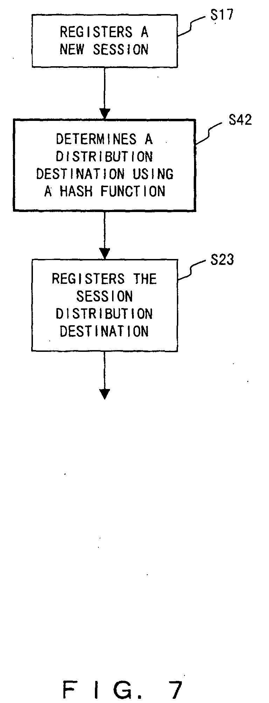

Fig. 7 shows the case where in the process consisting of steps S17, S22 and S23 of Fig. 4, the session distribution destination process in step S22 is performed by a hash method. Specifically, if the session management unit 23 registers a new session in step S17, the session distribution unit 24 determines each distribution destination by a hash method (step S42) and registers the determined session distribution destination in the session table 25 (step S23).

In the session distribution process by the hash method, each distribution destination is determined based on a hash value obtained by applying a hash function to specific information included in a received packet. Each distribution destination is determined by comparing a generated hash value with a prescribed preset range (or threshold, etc.). For example, it is assumed that there are two distribution destinations, packet relay processing units 21a and 21b. In this case, for example, if a hash value is within a range of "0000" through "7FFF" and within a range of "8000" through "FFFF", sessions are distributed to packet relay processing units 21a and 21b, respectively.

For information to be assigned to a hash function, a source IP address and the like are used. If a source IP address is used, packets forwarded from a data processing terminal having the IP address are always distributed to the same packet relay processing unit 21. In this way, when it is desired for some reason, that a packet be processed by a specific packet relay processing unit 21, this hash method is effective.

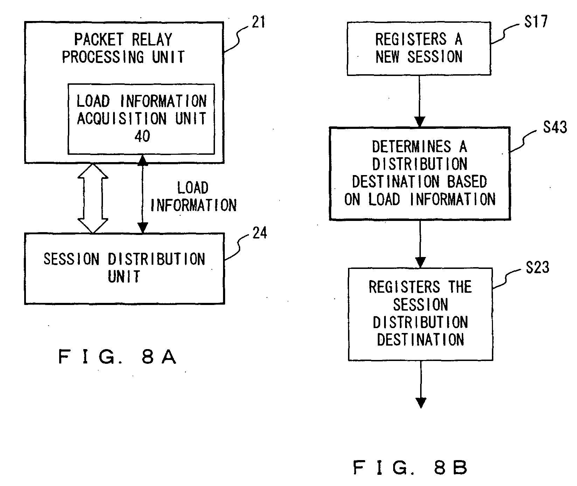

Figs. 8A and 8B show a dynamic load distribution method.

In this method, as shown in Fig. 8, each packet relay processing unit 21 comprises a load information acquisition unit 40, and the session distribution unit 24 can refer to the load information of each packet relay processing unit 21. For the load information, the working rate of a CPU, the processed number of sessions or the like can be used.

Fig. 8B shows the case where in the process consisting of steps S17, S22 and S23 of Fig. 4, the session distribution destination process in step S22 is performed by a dynamic load distribution method. Specifically, if the session management unit 23 registers a new session in step S17, the session distribution unit 24 determines each distribution destination by a dynamic load distribution method (step S43) and registers the determined session distribution destination in the session table 25 (step S23).

In the session distribution process by the dynamic load distribution method, the load information of the load information acquisition unit 40 is referenced and for example, a packet relay processing unit 21 whose CPU usage rate is pretty low or whose current number of session processing is pretty low, is determined as a distribution destination. Alternatively, each distribution destination can be determined taking into consideration both CPU usage rate and the number of sessions being processed.

By distributing sessions in such a way that the processing loads of packet relay processing units 21 are almost averaged, a plurality of CPUs can be efficiently used and accordingly processing performance can be displayed in proportion to the number of CPUs.

In the packet relay device 20 of the first preferred embodiment, each of the functional units (packet relay processing unit 21 through session distribution unit 24) shown in Fig. 2 can be freely provided for any hardware device.

Each of the second and third preferred embodiments is described below.

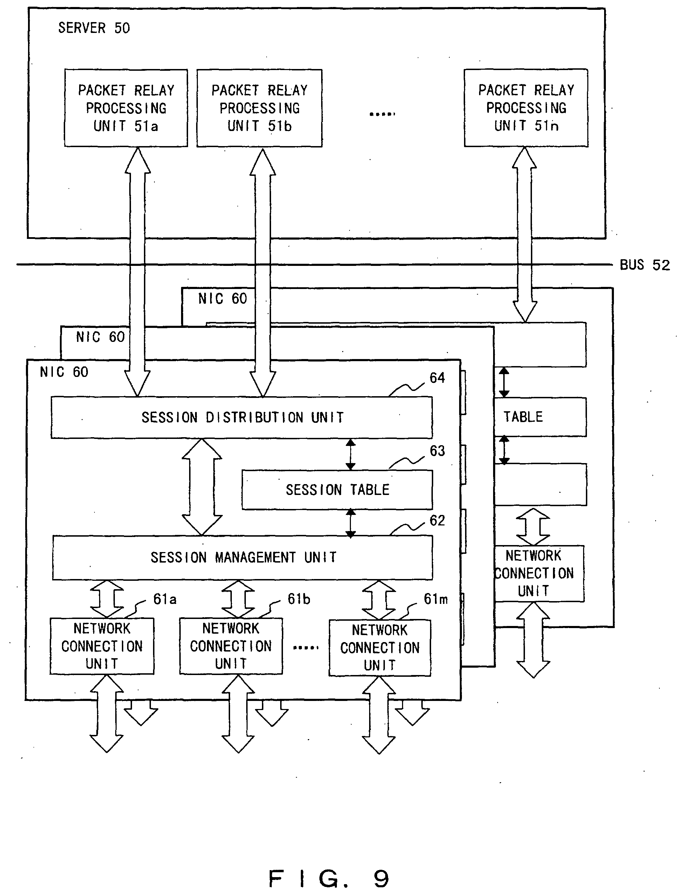

Fig. 9 shows the configuration of the second preferred embodiment. In the configuration of the second preferred embodiment shown in Fig. 9, a server 50 comprises a plurality of packet relay processing units 51a through 51n, and each network interface card (NIC) 60 comprises a plurality of network connection units 61a through 61m, a session management unit 62, a session table 63 and a session distribution unit 64. Each NIC 60 is provided for the slot of the bus 52 (for example, PCI (peripheral components interconnect bus)) of the server 50. Although the number of the NIC 60 can be only one, by providing a plurality of NICs 60, performance can be improved. Although as one example of the NIC 60, a network connection device is shown, it is not necessarily limited to this.

As described above, a server conventionally comprises a plurality of CPUs (a plurality of packet relay processing units). In the second preferred embodiment, there is no need to modify such an existing sever configuration. By providing the NICs 60, the plurality of CPUs can be efficiently handled, and accordingly processing performance can be displayed in proportion to the number of CPUs.

The process flow of the packet relay processing units 51a through 51n, network connection units 61a through 61m, session management unit 62, session table 63 and session distribution unit 64 is almost the same as that of the first preferred embodiment. Therefore, its description is omitted here. The second preferred embodiment differs from the first preferred embodiment in that packets are transmitted/received between the session distribution unit 64 and packet relay processing unit 51 through the bus 52 of the server 50. Since this does not affect the process, its description is omitted here.

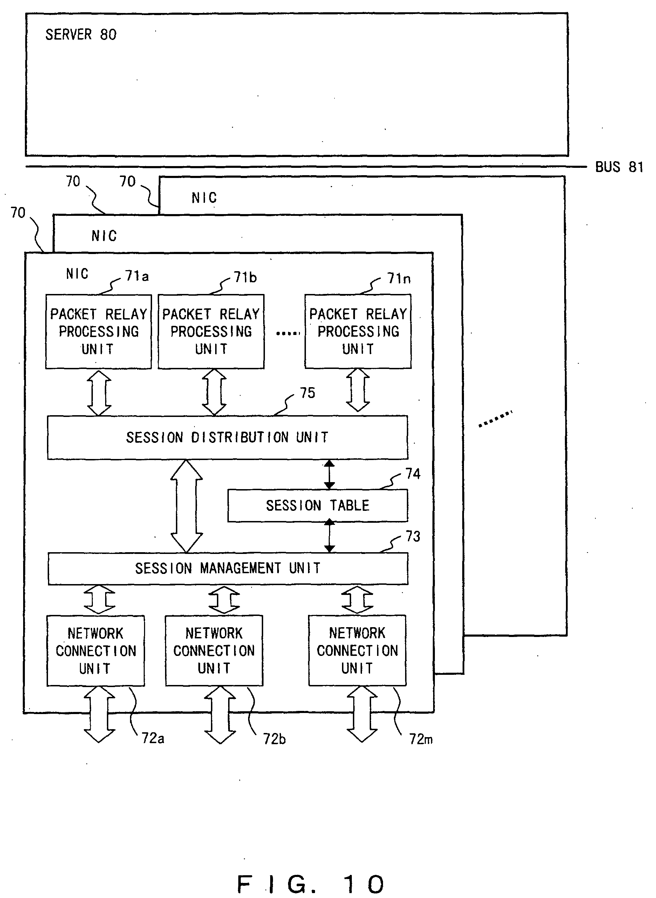

Fig. 10 shows the configuration of the third preferred embodiment.

As shown in Fig. 10, in the third preferred embodiment, each network interface card (NIC) 70 comprises a plurality of packet relay processing units 71a through 71n, a plurality of network connection units 72a through 72m, session management 73, session table 74 and session distribution unit 75. Since the process flow of this third preferred embodiment is also the same as that of the first preferred embodiment, its description is omitted here.

In the second preferred embodiment, by providing NICs 60 in the server 50 with a plurality of packet relay processing units, the packet relay device of the present invention can be realized. In the third preferred embodiment, the packet relay device of the present invention can be realized by providing NICs 70 even in a server 80 with no packet relay function.

In the third preferred embodiment, each CPU of the server 80 is not used for the packet process and is used for another process.

Even in the third preferred embodiment, a plurality of CPUs can be efficiently used and accordingly processing performance can be displayed in proportion to the number of CPUs as in other preferred embodiments.

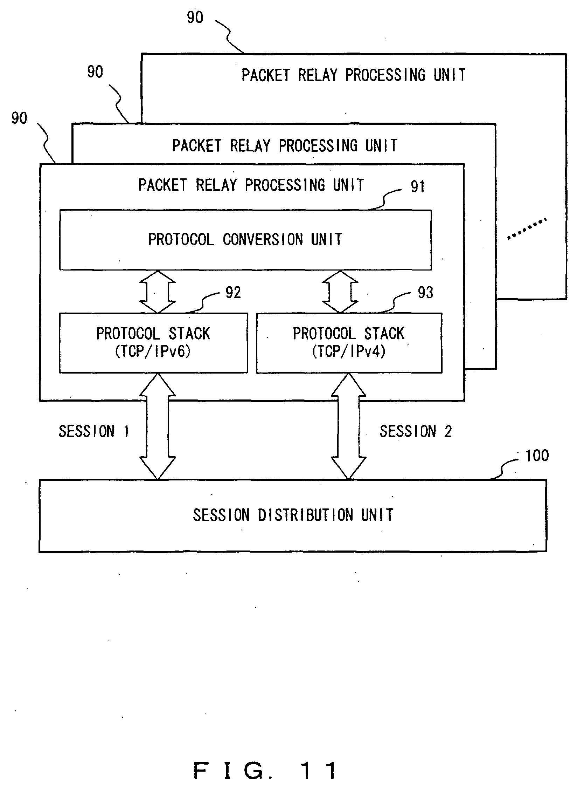

Fig. 11 shows a specific example of the usage of the packet relay device of the present invention.

As described above, the packet relay device of the present invention is used to relay packets between a plurality of networks. Therefore, the protocols of this plurality of networks are sometimes different. Fig. 11 shows the configuration in which protocol conversion is conducted in the packet relay processing unit when the protocol of one network is TCP/IPv6 and that of the other is TCP/IPv4.

In the configuration shown in Fig. 11, each packet relay processing unit 90 comprises the protocol stack 92 of TCP/IPv6 (Internet protocol version 6) and the protocol stack 93 of TCP/IPv4 (Internet protocol version 4), and it terminates a packet. By temporarily terminating a packet, each of two connections can be separately controlled. By temporarily terminating a packet, data in a packet can be cached.

Then, a protocol conversion unit 91 converts protocols. For example, IPv4/IPv6 protocol conversions are conducted by terminating session 1 and session 2 in IPv6 and IPv4 networks, respectively.

Protocol conversion is not limited to IPv4/IPv6 conversion.

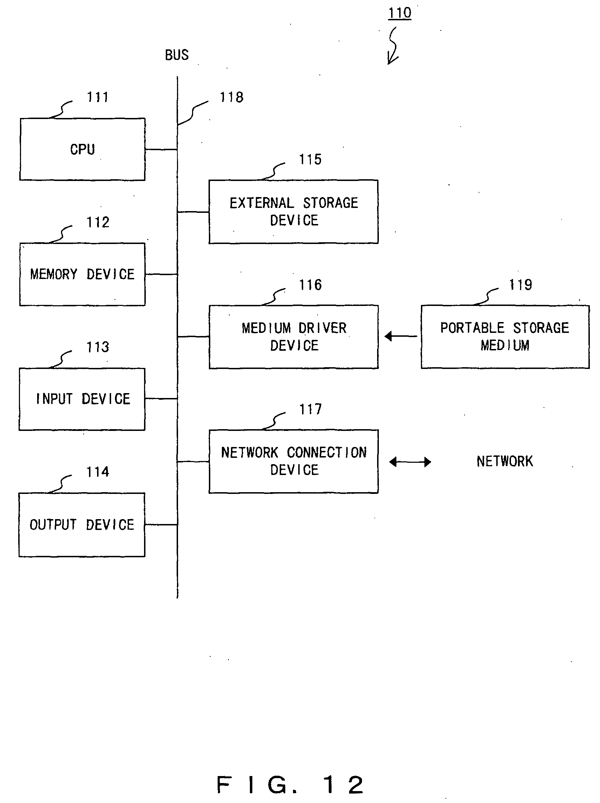

Fig. 12 shows an example hardware configuration of the server (computer).

The computer 110 shown in Fig. 12 comprises a CPU 111, a memory device 112, an input device 113, an output device 114, an external storage device 115, a medium driver device 116, a network connection device 117 and the like, and they are connected by a bus 118. The configuration shown in Fig. 12 is one example, and it is not limited to this.

The CPU 111 is a central processing unit controlling the entire computer 110.

The memory device 112 is memory temporarily storing a program or data stored in the external storage device 115 (or portable storage medium 119) when executing the program, updating the data and so on, such as a RAM and the like. The CPU 111 performs the various processes described above using the program/data read from the memory device 112.

The input device is a keyboard, a mouse, a touch panel and the like.

The output device 114 is a display, a printer and the like.

Neither input device 113 nor output device 114 is always needed.

The external storage device 115 is a hard disk device and the like, and stores the program/data and the like in order to implement the various functions described above.

The medium driver device 116 reads (or writes) the program/data and the like recorded in the portable storage medium 119. The portable storage medium is an FD (flexible disk), a CD-ROM, a DVD, a magneto-optical disk and the like, and any portable storage medium having a certain amount of memory capacity can be used for it.

The network connection device 117 connects the computer 110 to a network (the Internet, etc.) and enables it to transmit/receive the program/data and the like to/from an external data processing device.

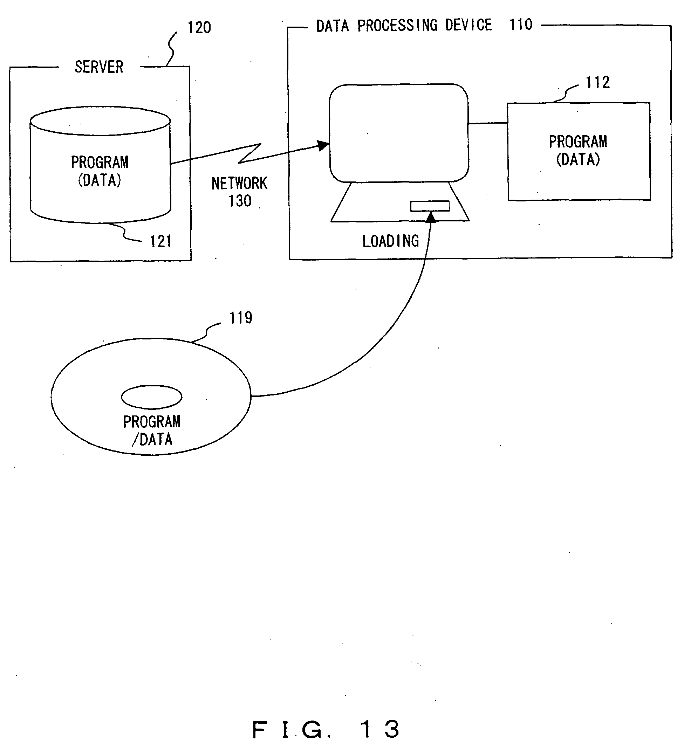

Fig. 13 shows how to load a storage medium recording the program or the program itself.

As shown in Fig. 13, the program/data can be read by inserting the portable storage medium 119 on which is recorded the program/data in order to realize the function of the present invention described above. Alternatively, the program (data) 121 stored in the server 120 of an external program/data provider can be downloaded through a network (the Internet, etc.) 130 connected to the computer 110 by the network connection device 117.

The present invention is not limited to a device/method, and can be embodied in a storage medium (portable storage medium 119, etc.) storing the program/data. Alternatively, it can be embodied in a program itself or a transmission signal transmitting the program through a wire or wirelessly.

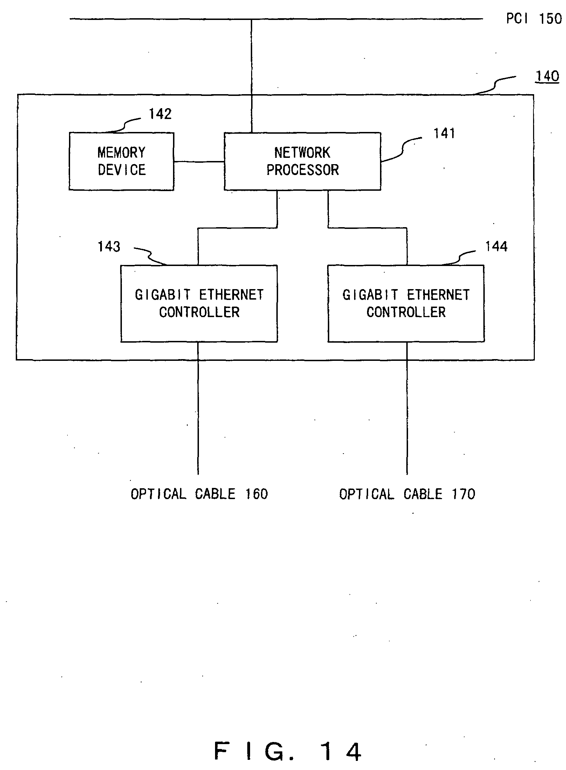

Fig. 14 shows an example hardware configuration of the network interface card (NIC).

The network interface card (NIC) 140 shown in Fig. 14 comprises a network processor 141, a memory device 142 and gigabit Ethernet controllers 143 and 144.

Since for the network processor 141, a general-purpose configuration can be used, there is no need to describe it. The network processor 141 reads the program/data stored in the memory device 142 and performs the process. The program/data stored in the memory device 142 is the program for implementing the various processes described above (processes shown in Figs. 4 through 8), the table shown in Fig. 3.

The network processor 141 is connected to the internal bus (PCI 150) of the server 50 or 80. The gigabit Ethernet controllers 143 and 144 are connected to optical cables 160 and 170, respectively, which are examples of the networks 1 and 2, respectively. This is one example, and the network is not limited to a cable. The Ethernet controller is not also limited to a gigabit type.

As described in detail above, according to the packet relay device, network connection device, packet relay method, storage medium and program of the present invention, by appropriately distributing packets for each session among a plurality of packet relay processing units using a session management unit and a session distribution unit, a plurality of CPUs can be efficiently handled and accordingly packet relay processing performance can be displayed in proportion to the number of CPUs.

## Claims

1. A packet relay device, comprising:
a plurality of packet relay processing units each independently performing a packet relay process;
a session management unit managing sessions; and
a session distribution unit distributing a session to one of the plurality of packet relay processing units, based on session management of the session management unit when a new session is registered.

2. The packet relay device according to claim 1, wherein
said plurality of packet relay processing units is provided for a server, and
said session management unit and session distribution unit are provided for a network connection device connected to the server.

3. The packet relay device according to claim 1, wherein
said plurality of packet relay processing units, session management unit and session distribution unit are provided for a network connection device connected to a server.

4. The packet relay device according to claim 1, wherein
said packet relay processing unit converts a protocol by terminating a packet.

5. The packet relay device according to claim 1, wherein
said session distribution unit changes a packet relay processing units as a distribution destination of a packet in order, every time a new session is registered.

6. The packet relay device according to claim 1, wherein
said session distribution unit determines a packet relay processing unit to which a packet is distributed, based on a hash value obtained by applying a hash function to information in the packet.

7. The packet relay device according to claim 1, wherein
said packet relay processing unit further comprises a load information acquisition unit, and
said session distribution unit distributes sessions, based on the load information obtained by the load information acquisition unit.

8. One or more network connection devices connected to a server with a plurality of packet relay processing units, comprising:
a session management unit managing sessions; and
a session distribution unit distributing a session to one of the plurality of packet relay processing units, based on session management of the session management unit when a new session is registered.

9. A packet relay device, which distributes a session to one of the plurality of packet relay processing units, and transmits packets for the session to the selected packet relay processing unit to make the packet relay processing unit to perform a packet relay process.

10. A computer-readable storage medium on which is recorded a program enabling a computer to realize units, said units comprising:
a plurality of packet relay processing units each independently performing a packet relay process;
a session management unit managing sessions; and
a session distribution unit distributing a session to one of the plurality of packet relay processing units, based on session management of the session management unit when a new session is registered.

11. A program that enables a computer to realize units, said units comprising:
a plurality of packet relay processing units each independently performing a packet relay process;
a session management unit managing sessions; and
a session distribution unit distributing a session to one of the plurality of packet relay processing units, based on session management of the session management unit when a new session is registered.
